# EUROPEAN PATENT SPECIFICATION

(11) **EP 0 834 761 B1**
(45) Date of publication and mention of the grant of the patent: **16.04.2003**
(21) Application number: 97113322.8
(22) Date of filing: 01.08.1997
(51) Int. Cl.: G02B 27/64

(54) **Image stabilizing apparatus**
Bildstabilisierungsvorrichtung
Appareil de stabilisation d'image

(30) Priority: 30.09.1996 JP 27879096
(43) Date of publication of application: 08.04.1998
(73) Proprietor: Fuji Photo Optical Co., Ltd., Saitama-ken (JP)
(72) Inventor: Takahashi, Kenichi, Omiya-shi, Saitama (JP); Nagata, Kouichi, Omiya-shi, Saitama (JP)
(74) Representative: Prechtel, Jörg, Dipl.-Phys. Dr.

(56) References cited:
- DE-A- 3 933 255
- US-A- 5 285 313
- PATENT ABSTRACTS OF JAPAN vol. 018, no. 642 (P-1838), 6 December 1994 -& JP 06 250100 A (FUJI PHOTO OPTICAL CO LTD), 9 September 1994,
- OSHIMA M ET AL: "VHS CAMCORDER WITH ELECTRONIC IMAGE STABILIZER" IEEE TRANSACTIONS ON CONSUMER ELECTRONICS, vol. 35, no. 4, 1 November 1989, pages 749-757, XP000087093
- PATENT ABSTRACTS OF JAPAN vol. 011, no. 152 (E-507), 16 May 1987 & JP 61 288664 A (MATSUSHITA ELECTRIC IND CO LTD), 18 December 1986,
- PATENT ABSTRACTS OF JAPAN vol. 095, no. 005, 30 June 1995 -& JP 07 043645 A (CANON INC), 14 February 1995,

## Description

### BACKGROUND OF THE INVENTION

### Field of the Invention

The present invention relates to an image stabilizing apparatus which is disposed within an optical apparatus such as monocular, binocular, or video camera in order to prevent optical images from being blurred upon viewing when the angle of emission of a luminous flux from the viewed object with respect to the optical axis of such an optical apparatus fluctuates upon vibration.

### Description of the Prior Art

In cases where an optical apparatus, such as monocular or binocular, aimed for optical viewing is operated as being held with a hand, in particular when the optical apparatus is used as being brought into an airplane, vehicle, or the like, vibration or rolling of the airplane, vehicle, or the like is transmitted to the optical apparatus, whereby the angle of emission of the luminous flux from the viewed object with respect to its optical axis is likely to fluctuate. As a result, the viewed optical image often deteriorates. Even when such a vibration transmitted to the optical apparatus has a small amplitude, the angle of fluctuation with respect to the optical axis is magnified since the monocular, binocular, or the like has a narrow visual field and magnifies the object upon viewing. Hence, the viewed image may move fast in the visual field even upon rolling with a relatively low speed of angular fluctuation, and it may deviate from the visual field when the angle of fluctuation is large. Also, upon rolling with a relatively high speed of angular fluctuation, even when the angle of fluctuation is relatively small, the viewed object has a higher speed of angular fluctuation in response to the magnification of the optical apparatus, whereby the image may blur and deteriorate.

There have conventionally been proposed various kinds of image stabilizing apparatus for preventing a viewed image from deteriorating due to fluctuation in the angle of emission of a luminous flux with respect to the optical axis upon vibration or rolling transmitted to the optical apparatus.

For example, Japanese Patent Publication No. 57-37852 discloses a binocular comprising a vibration isolator therein utilizing a rotational inertial body (gyro motor) in order to correct blur of the viewed image in the binocular.

Namely, in this prior art, an erecting prism is disposed on the optical axis between objective and ocular lenses of the binocular so as to be secured onto gimbal suspension means to which the rotational inertial body is attached, whereby the erecting prism is substantially held in the same posture even when the binocular is vibrated upon a manual shake or the like, so as to prevent the viewed image of the binocular from blurring.

In such a kind of prior art utilizing the rotational inertial body and the gimbal suspension means, while the image can be stabilized with a high precision, a high-speed rotator is necessary for obtaining a large inertial force in a small space. Also, the rotator should have a high precision since it is necessary for the rotator to minimize its own vibration. Due to these requirements for small size, high speed, and high precision, the apparatus may become disadvantageous in terms of cost, life, and time necessary for obtaining a required inertial force after the power is turned on. Also, when the effective diameter of the objective lens is increased in order to attain a higher magnification or resolution in the binocular, the erecting prism has a larger size, thereby necessitating a larger inertial force. Consequently, the disadvantages noted above may become greater. Also, a larger amount of electric power may be consumed accordingly.

Therefore, there has been proposed a commonly-assigned image stabilizing apparatus (Japanese Unexamined Patent Publication No. 6-250100) in which the gimbal suspension means is equipped with an angular velocity sensor in place of the above-mentioned rotational inertial body, while the rotational position of the gimbal suspension means is controlled on the basis of the output value from the angular velocity sensor so as to secure the posture of the erecting prism with respect to the earth (system of inertia). In this apparatus, the erecting prism held by the gimbal suspension means basically has an inertial force and, for high-speed vibrations with a high frequency in particular, exhibits a high performance for holding a posture against a vibration with a relatively large amplitude. Accordingly, a small force is sufficient for controlling the rotational position based on the output from the angular velocity sensor. The disclosure of this document forms the preamble of claim 1.

Variangle prisms and other kinds of image stabilizing apparatus which drive lenses, however, necessitate an active driving section. Since it is necessary for the driving section to be moved with a high speed in order to correct a large amplitude in high-frequency vibrations, such an amplitude is hard to correct over a large angle range.

On the other hand, when binoculars or video cameras are used, panning or tilting is often performed at a high speed. For example, a fast panning/tilting operation is required when a flying object such as bird or airplane is viewed in a tracking manner. Accordingly, the binoculars or video cameras may not always be unintentionally shaken.

Also, upon such an operation, it is necessary for the optical system in the apparatus to smoothly follow the viewed object in its moving direction, thus requiring a function conflicting with the above-mentioned vibration-isolating function for securing the optical system to its initial posture against vibration.

Though it has been tried, in view of characteristics of such an apparatus, to uniformly separate ranges for performing these two functions according to differences in vibration frequency, vibration amplitude, change in angular velocity, and the like, it has not always been satisfactory.

For example, though a manual shake is considered to be within the range from 0.5 to 15 Hz in general, a panning/tilting operation included in this range is often required. Thus, the circumstances where the above-mentioned functions are needed may vary each time.

### SUMMARY OF THE INVENTION

In view of the foregoing, it is an object of the present invention to provide an image stabilizing apparatus which can perform a smooth panning/tilting operation as required by an operator as well as a favorable vibration-isolating function, while reducing the weight, size, and power consumption of the apparatus.

The image stabilizing apparatus in accordance with the present invention is attached to an optical apparatus comprising a monocular or binocular optical system including an erecting prism disposed between objective and ocular lenses which are firmly disposed within a case.

The image stabilizing apparatus comprises:
gimbal suspension means having first and second rotational axes respectively extending in transverse and vertical directions of the optical apparatus so as to pivotally attach the erecting prism to the case;
an actuator for pivotally moving the gimbal suspension means about the first and second rotational axes;
first and second angular position data detecting means for respectively detecting angular position data of the gimbal suspension means about the first and second rotational axes;
first and second angular velocity data detecting means, firmly attached to the gimbal suspension means, for respectively detecting angular velocity data of the gimbal suspension means upon a change in posture of the optical apparatus;
feedback control means for controlling pivotal movement of the gimbal suspension means about the first and second rotational axes by driving the actuator, based on the data detected by the angular position data detecting means and angular velocity data detecting means, so as to secure the erecting prism with respect to a system of inertia;
gain changing means for changing a gain of the feedback control means; and
gain change instructing means, disposed at an externally operable position, for instructing the gain changing means to change the gain.

The gain change instructing means may be configured so as to enable a switching operation between a low gain mode aimed for image stabilization and a high gain mode aimed for at least one of panning and tilting operations. Also, a plurality of switching steps may be provided so as to be operable between the low and high gain modes. Further, the gain may be changed continuously. The gain change instructing means may be a switch disposed on the outer surface of the case.

Preferably, the angular velocity data detecting means is an angular velocity sensor for detecting the amount of angular velocity of the gimbal suspension means about the rotational axes due to a shake of the optical apparatus. Such an angular velocity sensor is constituted by a piezoelectric vibration gyro sensor using a columnar vibrator and a piezoelectric ceramic member.

The above-mentioned "gain" refers to the ratio of a change in output signal of the angular position data detecting means to a minute change in angular position of the gimbal suspension means around the rotational axes.

### BRIEF DESCRIPTION OF THE DRAWINGS

Fig. 1 is a block diagram showing a control loop in an image stabilizing apparatus in accordance with an embodiment of the present invention;
Fig. 2 is a sectional plan view showing a binocular including therein the above-mentioned image stabilizing apparatus;
Fig. 3 is a sectional front view showing the above-mentioned binocular;
Fig. 4 is a sectional side view showing the above-mentioned binocular;
Fig. 5 is a perspective view showing the above-mentioned binocular;
Fig. 6 is a schematic perspective view for explaining functions of the above-mentioned image stabilizing apparatus;
Fig. 7 is a block diagram for explaining functions of the above-mentioned image stabilizing apparatus; and
Fig. 8 is a side view for explaining an erecting prism shown in Fig. 2.

### DETAILED DESCRIPTION OF THE PREFERRED EMBODIMENTS

In the following, embodiments of the present invention will be explained with reference to the accompanying drawings.

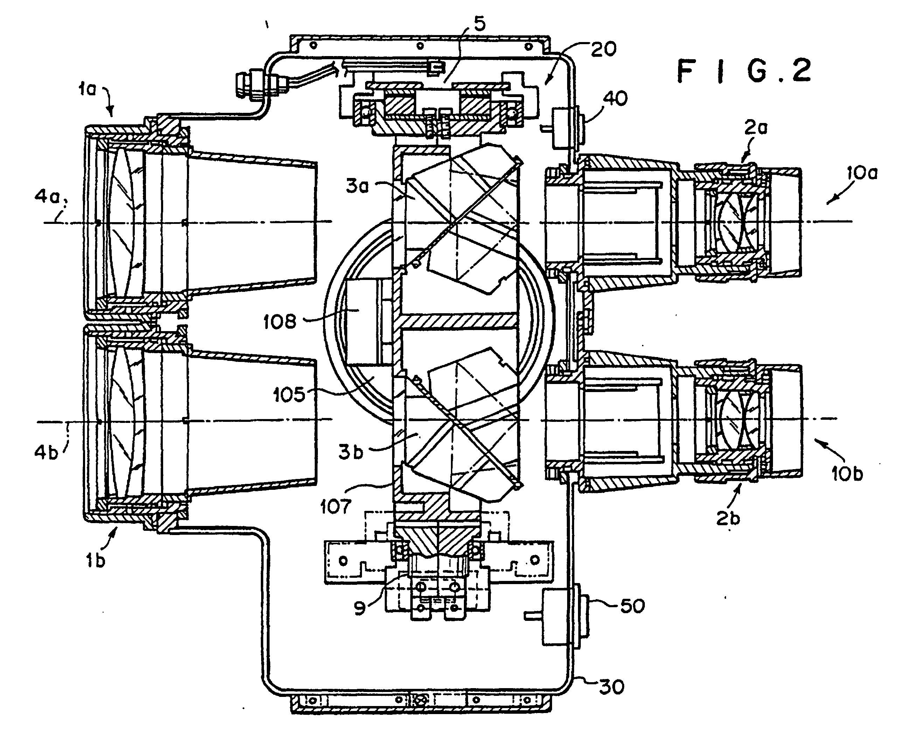

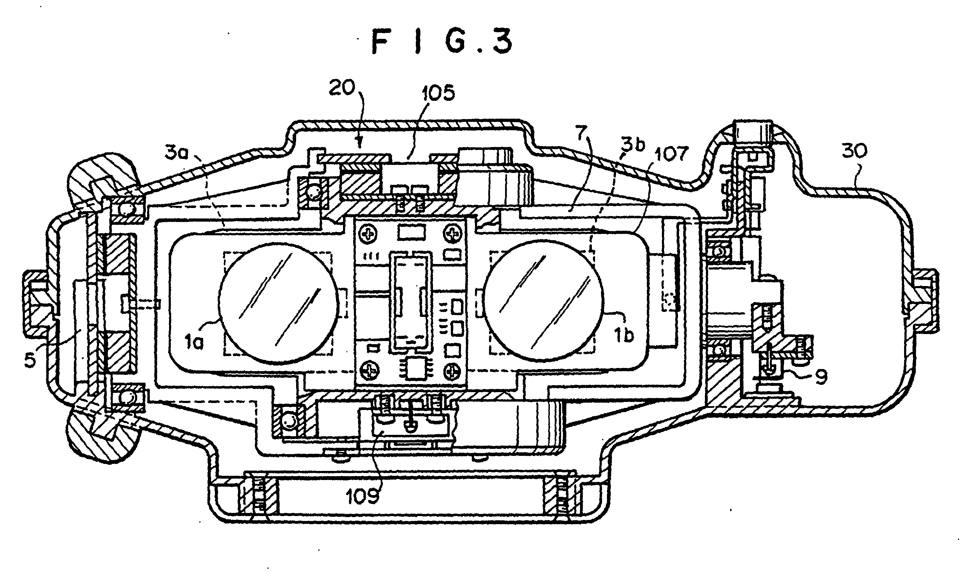

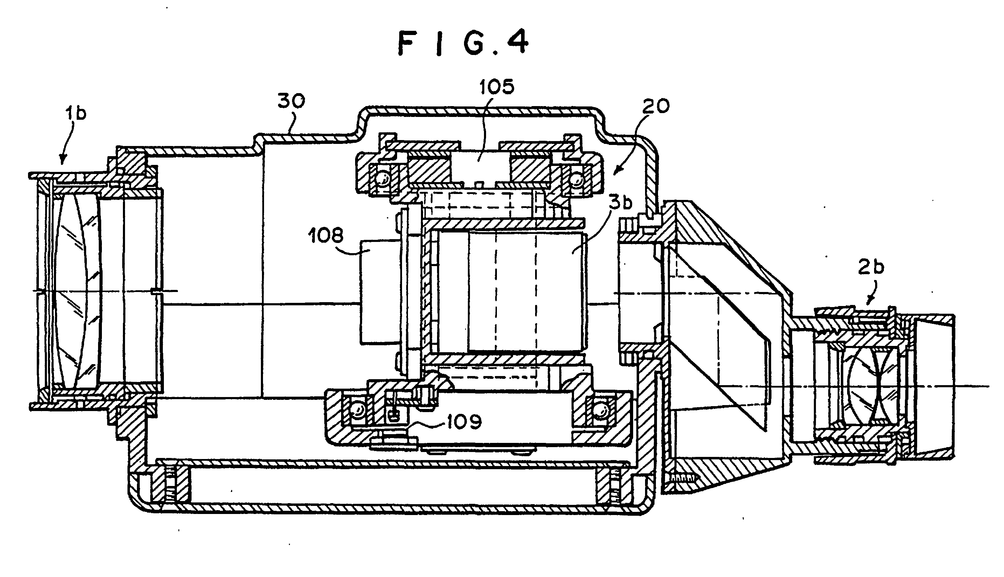

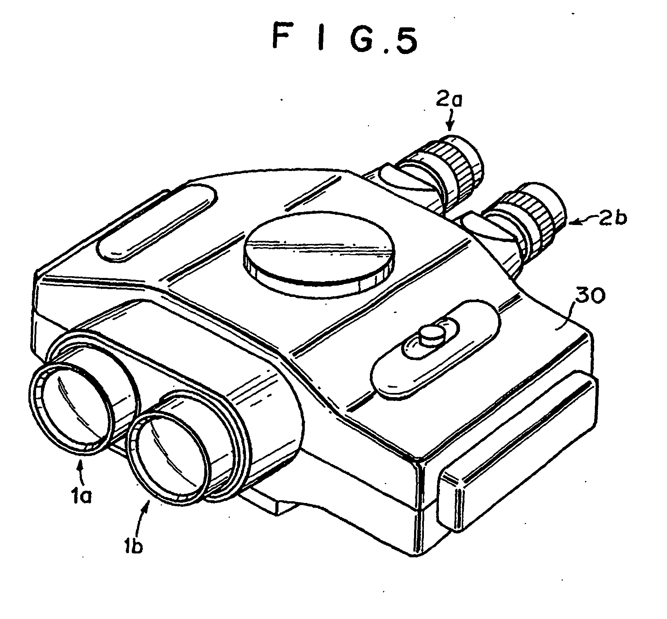

Figs. 2, 3, 4, and 5 are respectively a sectional plan view, sectional front view, sectional side view, and perspective view showing a state where an image stabilizing apparatus in accordance with an embodiment of the present invention is built into a binocular. As depicted, a binocular in which an image stabilizing apparatus 20 of this embodiment is built into a case 30 comprises a pair of objective lens systems 1a and 1b; a pair of ocular lens systems 2a and 2b; and a pair of erecting prisms 3a and 3b. The objective lens 1a, the ocular lens 2a, and the erecting prism 3a constitute a first telescopic system 10a; whereas the objective lens 1b, the ocular lens 2b, and the erecting prism 3b similarly constitute a second telescopic system 10b. A pair of these first and second telescopic systems 10a and 10b constitute a binocular system.

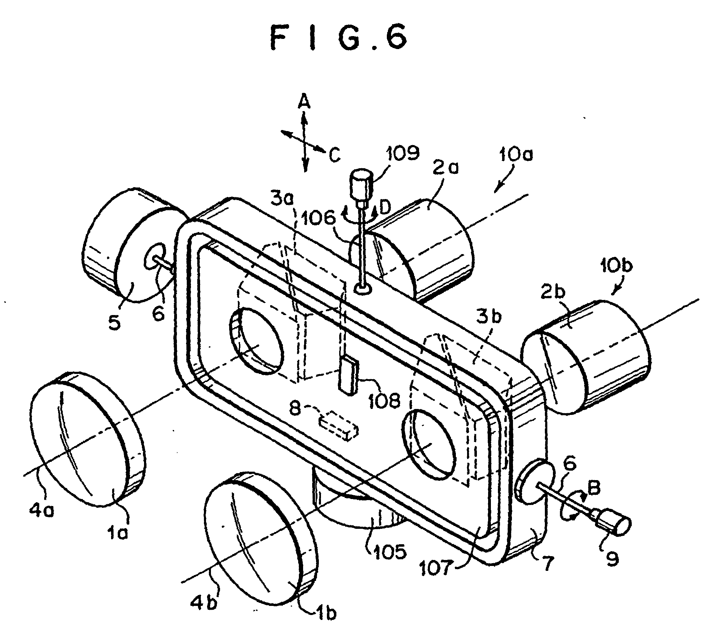

The pair of objective lens systems 1a and 1b and pair of ocular lens systems 2a and 2b constituting this binocular system are firmly attached to the case 30 of this optical apparatus, whereas the erecting prisms 3a and 3b are pivotally attached to the case 30 by way of gimbal suspension members 7 and 107 respectively having rotational axes 6 and 106 (see Fig. 6) extending in the vertical directions of the apparatus (directions orthogonal to the extending direction of the optical axis and aligning direction of the objective lens systems 1a and 1b) and in the transverse directions of the apparatus (aligning direction of the objective lens systems 1a and 1b).

The back face of the case 30 is provided with a gain change instructing switch 40 for enabling an external operation of gain switching in a control loop, which will be explained later, and a main switch 50.

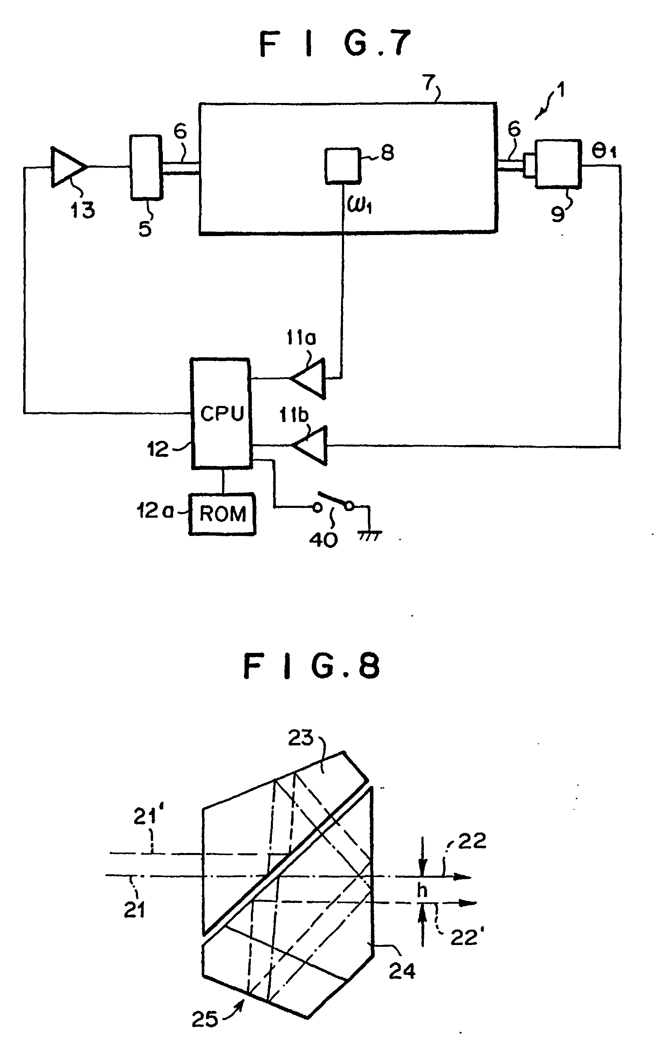

In the following, with reference to Figs. 6 and 7, basic functions which are prerequisite to the apparatus of this embodiment will be explained. Here, in the specification, the vertical directions of the apparatus refer to the directions of depicted arrows A, whereas the transverse directions of the apparatus refer to the directions of depicted arrows C.

In Fig. 6, in a state where the gimbal suspension members 7 and 107 equipped with the erecting prisms 3a and 3b are secured to the case 30, namely, in a state where the erecting prisms 3a and 3b attached to the gimbal suspension members 7 and 107 are secured to the case 30, this optical apparatus attains a configuration of an ordinary binocular system. Hereinafter, optical axes 4a and 4b of the respective telescopic optical systems 10a and 10b in this state will be referred to as the optical axes of this optical apparatus.

Appropriate positions of the objective lens systems 1a and 1b, ocular lens systems 2a and 2b, erecting prisms 3a and 3b, gimbal suspension members 7 and 107, rotational axes 6 and 106, and the like are described in detail in known publications (e.g., Japanese Patent Publication No. 57-37852) and thus will not be explained here.

As shown in Fig. 6, in the apparatus of this embodiment, the inner gimbal suspension member 107 is axially supported by the outer gimbal suspension member 7, thereby forming a gimbal suspension of a double structure. The outer gimbal suspension member 7 is pivotally moved by the rotational axis 6, which extends in the transverse directions of the apparatus, so as to correct blurs of an image in the vertical directions; whereas the inner gimbal suspension member 107 is pivotally moved by the rotational axis 106, which extends in the vertical directions of the apparatus, so as to correct blurs of the image in the transverse directions. The erecting prisms 3a and 3b are attached to the inner gimbal suspension member 107. Here, the upper and lower sides in Fig. 6 are depicted so as to be opposite to those of Figs. 2 to 5.

An angular velocity sensor 8 is secured to the center part of the upper wall portion of the outer gimbal suspension member 7, whereas an angular velocity sensor 108 is secured to the center part of the front wall portion of the inner gimbal suspension member 107. The angular velocity sensor 8 is a sensor for detecting a rotational angular velocity ω₁ when the outer gimbal suspension member 7 is pivotally moved in the directions of arrows B due to a vertical shake of the case 30, whereas the angular velocity sensor 108 is a sensor for detecting a rotational angular velocity ω₂ when the inner gimbal suspension member 107 is pivotally moved in the directions of arrows D due to a transverse shake of the case 30.

One end of the rotational axis 6 is provided with a position sensor 9 for detecting a rotational angle θ₁ of the rotational axis 6 in order to effect position feedback control in addition to the velocity feedback control based on the detected angular velocity mentioned above; whereas the other end of the rotational axis 6 is provided with a rotating motor 5 which revolves, based on the values detected by the angular velocity sensor 8 and position sensor 9, the rotational axis 6 of the gimbal suspension member 7 such that the erecting prisms 3a and 3b always resume their initial postures upon vertical shakes of the case 30. On the other hand, one end of the rotational axis 106 is provided with a position sensor 109 for detecting a rotational angle θ₂ of the rotational axis 106 in order to effect the position feedback control in addition to the velocity feedback control based on the detected angular velocity; whereas the other end of the rotational axis 106 is provided with a rotating motor 105 which revolves, based on the values detected by the angular velocity sensor 108 and position sensor 109, the rotational axis 106 of the gimbal suspension member 107 such that the erecting prisms 3a and 3b always resume their initial postures upon transverse shakes of the case 30.

In the following, a basic concept of a control loop in the apparatus of this embodiment will be explained with reference to Fig. 7. As depicted, this apparatus comprises amplifiers 11a and 11b for respectively amplifying the angular velocity signal from the angular velocity sensor 8 and the angle signal from the position sensor 9; a CPU 12 for computing, based on these angular velocity and angle signals, an amount of driving of the rotating motor 5 by which the erecting prisms 3a and 3b resume their initial postures and outputting a control signal based on thus computed amount; and a motor driving circuit 13 for amplifying the control signal from the CPU 12 so as to drive the rotating motor 5. Connected to the CPU 12 are a ROM 12a, which stores various kinds of programs, and the gain change instructing switch 40 for instructing the CPU 12 to change the gain of the control loop. As with the signals detected by the angular velocity sensor 8 and position sensor 9, the signals detected by the angular velocity sensor 108 and position sensor 109 are converted into a control signal by a control loop similar to that shown in Fig. 7, whereby the rotating motor 105 is driven by this control signal.

Though two sets of control loops are thus respectively necessary for causing the two pieces of outer and inner gimbal suspension members 7 and 107 to resume their initial postures in the apparatus of this embodiment, the CPU 12 may be used in common.

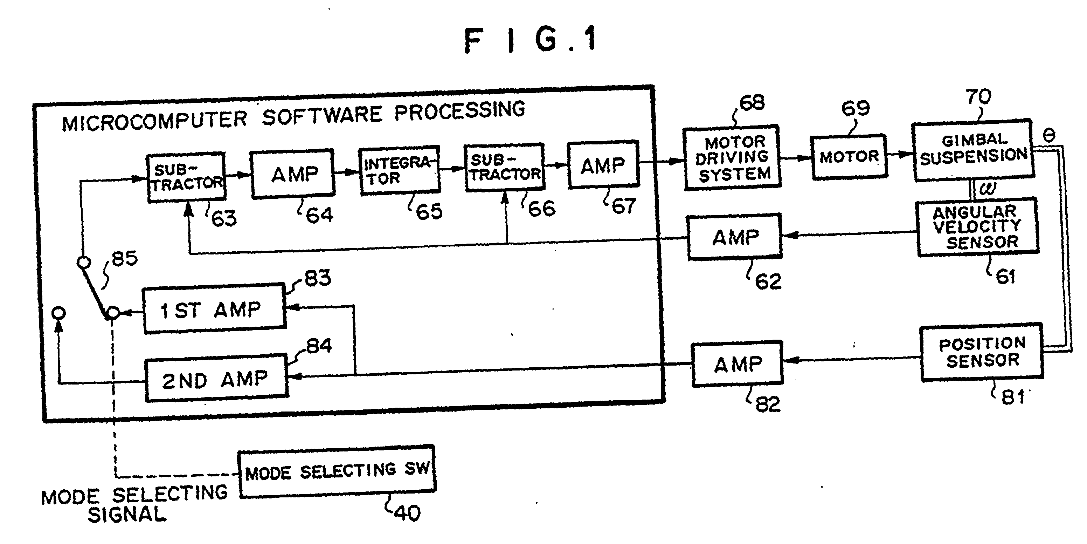

In the following, a detailed configuration of the control loop will be explained with reference to Fig. 1.

This control loop is constituted by a double feedback loop made of a velocity (angular velocity) feedback loop and a position (angle) feedback loop. Also, this control loop is constituted by a combination of a software loop formed by a microcomputer program of the CPU 12 and a hardware loop.

First, in the velocity feedback loop, an angular velocity ω of a gimbal suspension 70 (7, 107) about the rotational axis 6 or 106 is detected by an angular velocity sensor 61 (8, 108). After being amplified by a hardware amplifier 62, the detected value ω is negatively fed back to a motor driving system 68 by way of a subtractor 66 and an amplifier 67 (first velocity feedback loop). Consequently, a reverse rotational torque is generated in a motor 69, thereby effecting a control such that the gimbal suspension 70 resumes its initial posture against a vibration such as a manual shake, namely, such that the erecting prisms 3a and 3b are secured to the earth (system of inertia) against a vibration with a large angular velocity.

Also, in this velocity feedback loop, the value detected by the angular velocity sensor 61 is fed into an integrator 65 by way of a subtractor 63 and an amplifier 64. Thereafter, in the subtractor 66, the output value from the integrator 65 is subtracted from the detected value directly fed therein from the amplifier 62, and the result of subtraction is negatively fed back to the motor driving system 68 (second velocity feedback loop). In the case where the value detected by the angular velocity sensor 61 is thus negatively fed back by way of the integrator 65, the control system can function even when the steady-state deviation with respect to a velocity instruction is zero, namely, when a velocity input value in the feedback loop is equal to its velocity output value. Also, since the loop gain can be doubled, the gimbal suspension 70 can be stabilized at a high speed (i.e., accuracy in stabilization can be increased).

Since the integrator 65 functions to average the- input value, and its output value is subtracted from the detected angular velocity value in the subtractor 66, it can be supposed to have a damper-like function for preventing the first velocity feedback loop from oscillating.

In the position feedback loop, on the other hand, a position sensor 81 (9, 109) detects an angular position θ of the gimbal suspension 70 about the rotational axis 6 or 106, and thus detected value is amplified by a hardware amplifier 82 and then is returned to the motor driving system 68 so as to control the rotating motor 69 (5, 105) such that the gimbal suspension 70 approaches an angular position θ₀ of the midpoint of the visual axis.

In an optical apparatus such as binocular, there is a case where panning or tilting is effected to a large extent. In such a case, when the velocity feedback loop is used alone in the control, the response to panning or tilting may become worse, whereby the gimbal suspension 70 may pivot greatly so as to collide with an end portion of the case 30 at its movable limit.

Accordingly, in this position feedback loop, when it is detected that the gimbal suspension 70 has greatly pivoted, a signal corresponding to thus detected value is returned to the motor driving system 68, whereby the motor 69 is driven so as to forcibly return the gimbal suspension 70 toward the midpoint of the visual axis.

Consequently, the gimbal suspension 70 is prevented from accidentally colliding with the end portion of the case 30 at its movable limit upon panning, tilting, or the like, while the trackability in panning or tilting is made favorable.

When binoculars are actually used, a flying object such as bird or airplane is often viewed in a tracking manner. In such a case, a fast panning/tilting operation, e.g., a fast panning operation in particular, is required. In such a panning operation, it is necessary for the optical system in the apparatus to smoothly follow the viewed object in its moving direction, thus requiring a function conflicting with the vibration-isolating function for securing the optical system to its initial posture against vibration. Namely, upon such a panning/tilting operation, it is necessary to nullify the vibration-isolating function. Since the panning/tilting operation is effected as required by the observer, it is desirable that switching be made, for example, between a panning mode and a vibration-isolating mode by an operation effected by the observer.

Accordingly, in the apparatus of this embodiment, the mode selecting switch (gain change instructing switch) 40 is disposed at the back face portion of the case 30, so that the gain in the above-mentioned control loop is changed in response to a selection of this switch 40, thus allowing switching between a vibration-isolating mode in which the control loop has a small gain and a panning mode in which the control loop has a large gain.

Namely, the velocity feedback loop is mainly aimed at the vibration-isolating function, whereas the position feedback loop is mainly aimed at the panning/tilting function that is a tracking function for the case 30.

Accordingly, a system mainly aimed at the panning/tilting function can be attained when the feedback ratio of the position feedback loop is made relatively large, whereas a system mainly aimed at the vibration-isolating function can be attained when the feedback ratio of the position feedback loop is made relatively small.

In the above-mentioned embodiment, as shown in Fig. 1, a first amplifier 83 having a small amplification factor and a second amplifier 84 having a large amplification factor are disposed within the position feedback loop, thus allowing, in response to a switching operation of the mode selecting switch 40 effected by an operator, switching between a low gain mode in which the detected signal from the position sensor 81 is fed back by way of the first amplifier 83 and a high gain mode in which the detected signal from the position sensor 81 is fed back by way of the second amplifier 84. This mode switching operation within the control loop is effected by a software switch section 85 which changes the loop connection based on a mode selecting signal in response to the switching operation of the mode selecting switch 40 effected by the operator.

Namely, when the software switch section 85 is connected to the first amplifier 83, the value fed into the subtractor 63 from the position feedback loop becomes smaller, thereby relatively increasing the value fed therein from the velocity feedback loop, thus attaining the vibration-isolating mode (low gain mode). Accordingly, the gimbal suspension 70 can favorably be secured with respect to the earth (system of inertia) against vibrations such as a manual shake.

By contrast, when the software switch section 85 is connected to the second amplifier 84, the value fed into the subtractor 63 from the position feedback loop becomes greater, thereby relatively decreasing the value fed therein from the velocity feedback loop, thus attaining the panning/tilting mode (high gain mode). Accordingly, the trackability with respect to panning or tilting becomes favorable.

Whether the panning/tilting function or the vibration-isolating function is mainly aimed greatly varies depending on the operator's liking and circumstances where the operator is in.

The above-mentioned embodiment, in which the operator can easily effect switching, has a configuration suitable for the actual situation where these two modes are used.

Though the gain is switched between two steps in the foregoing explanation, the configuration may also be such that a plurality of switching steps are provided between a low gain mode aimed at image stabilization and a high gain mode aimed at panning or tilting or such that the gain is continuously changed, of course.

Examples of the erecting prisms 3a and 3b include Schmidt erecting prisms, Abbe erecting prisms, Bauern Fend erecting prisms, Porro erecting prisms, and roof erecting prisms. Fig. 8 shows a Schmidt erecting prism. As depicted, this Schmidt erecting prism is constituted by prisms 23 and 24, while a part 25 of the prism 24 serves as a roof reflecting surface. In such an erecting prism, there is a position of incident light optical axis at which an incident light optical axis 21 and an emanating light optical axis 22 can be placed on the same line as depicted. As shown in Fig. 8, in such an erecting prism in which the incident light optical axis 21 and the emanating light optical axis 22 can be placed on the same line, a light beam 21' which is in parallel to the optical axis 21 and separated upward therefrom by h becomes, after being transmitted through the erecting prism, a light beam 22' which is in parallel to the optical axis 22 and separated downward therefrom by h. Here, not only such a prism in which the incident light optical axis and the emanating light optical axis are placed on the same line but also other prisms can be used as long as they are erecting prisms.

Each of the angular velocity sensors 8 and 108 is a piezoelectric vibration gyro sensor utilizing Coriolis force, which comprises a columnar vibrator having a cylindrical form or the like and a plurality of pieces of piezoelectric ceramic members. Namely, a side face of the columnar vibrator is provided with at least two pieces of detection-purpose piezoelectric ceramic members and at least one piece of feedback-purpose piezoelectric ceramic member.

The respective detection-purpose piezoelectric ceramic members output their detected signals having different values in response to a vibration, and a difference therebetween is computed, thereby yielding an angular velocity.

The feedback-purpose piezoelectric ceramic member is used for correcting the phase of the detected signals.

Since these angular velocity sensors 8 and 108 have a simple configuration and a very small size, the image stabilizing apparatus 20 itself can have a simple configuration and a small size. Also, since they have a high S/N and a high precision, the angular velocity control can be effected with a high accuracy.

Without being restricted to the above- mentioned embodiment, the image stabilizing apparatus of the present invention can be modified in various manners. For example, as the angular velocity data detecting means, not only the piezoelectric vibration gyro sensors of columnar vibrator type but those using various types of vibrators such as triangular prism vibrator type, quadrangular prism vibrator type, and tuning fork vibrator type can be used. Further, other kinds of various angular velocity sensors can be used.

Here, as the angular position data detecting means, various kinds of angle sensors such as resolver, synchro, and rotary encoder may be used in place of the above-mentioned position sensor.

Though the apparatus of the above-mentioned embodiment is configured so as to be applied to a binocular, the image stabilizing apparatus of the present invention can also be configured so as to be applicable to a monocular. Also, similar effects can be attained when the apparatus is attached to a camera such as video camera.

In the image stabilizing apparatus of the present invention, a gimbal suspension equipped with an erecting prism is controlled by an electric control system using angle data detecting means, a control circuit system, and a rotating motor so as to resume its initial posture, i.e., to be secured to the earth (system of inertia). Since the control system has a light weight and small size, is inexpensive, and consumes only a small power, the optical apparatus as a whole can attain a lighter weight, smaller size, less power consumption, and lower manufacturing cost.

Also, a gain change instructing switch for switching the gain of thus configured control loop is disposed at a position where the operator can externally operate it, such that the gain of the above-mentioned control loop is changed in response to the operation of this switch, thus allowing switching between a vibration-isolating mode in which the control loop has a small gain and a panning/tilting mode in which the control loop has a large gain. Accordingly, as required by the operator, both of a smooth panning/tilting operation and a favorable vibration-isolating function can be satisfied.

## Claims

1. An image stabilizing apparatus attached to an optical apparatus, said optical apparatus comprising a monocular or binocular optical system including an erecting prism disposed between objective and ocular lenses which are firmly disposed within a case;
said image stabilizing apparatus comprising:
gimbal suspension means having first and second rotational axes respectively extending in transverse and vertical directions of said optical apparatus so as to pivotally attach said erecting prism to said case;
an actuator for pivotally moving said gimbal suspension means about said first and second rotational axes;
first and second angular position data detecting means for respectively detecting angular position data of said gimbal suspension means about said first and second rotational axes;
first and second angular velocity data detecting means, firmly attached to said gimbal suspension means, for respectively detecting angular velocity data of said gimbal suspension means upon a change in posture of said optical apparatus;
feedback control means for controlling pivotal movement of said gimbal suspension means about said first and second rotational axes by driving said actuator, based on the data detected by said angular position data detecting means and angular velocity data detecting means, so as to secure said erecting prism with respect to a system of inertia; **characterized by**
gain changing means for changing a gain of said feedback control means; and
gain change instructing means, disposed at an externally operable position of said optical apparatus, for enabling an operator to instruct said gain changing means to change said gain.

2. An image stabilizing apparatus according to claim 1, wherein said gain change instructing means is configured so as to enable a switching operation between a low gain mode aimed for image stabilization and a high gain mode aimed for at least one of panning and tilting operations.

3. An image stabilizing apparatus according to claim 1, wherein said gain change instructing means is configured such that a plurality of switching steps are operable between a low gain mode aimed for image stabilization and a high gain mode aimed for at least one of panning and tilting operations.

4. An image stabilizing apparatus according to claim 1, wherein said gain change instructing means is configured such that said gain is continuously changeable between a low gain mode aimed for image stabilization and a high gain mode aimed for at least one of panning and tilting operations.

5. An image stabilizing apparatus according to claim 1, wherein said gain change instructing means is a switch disposed on an outer surface of said case.

6. An image stabilizing apparatus according to claim 1, wherein said angular velocity data detecting means is an angular velocity sensor for detecting an amount of angular velocity of said gimbal suspension means about said rotational axes due to a shake of said optical apparatus, said angular velocity sensor being constituted by a piezoelectric vibration gyro sensor using a columnar vibrator and a piezoelectric ceramic member.

## Patentansprüche

1. Bildstabilisierungsvorrichtung, welche an einer optischen Vorrichtung angebracht ist, wobei die optische Vorrichtung ein monokulares oder ein binokulares optisches System mit einem Umkehrprisma umfasst, welches zwischen Objektiv- und Okularlinsen angeordnet ist, die in einem Gehäuse fest angeordnet sind,
wobei die Bildstabilisierungsvorrichtung umfasst:
ein kardanisches Aufhängungsmittel mit einer ersten und einer zweiten Drehachse, welche sich in der Quer- bzw. der Vertikalrichtung der optischen Vorrichtung erstrecken, zur schwenkbaren Anbringung des Umkehrprismas an dem Gehäuse,
ein Stellglied zur schwenkbaren Bewegung des kardanischen Aufhängungsmittels um die erste und die zweite Drehachse,
ein erstes und ein zweites Winkelstellungs-Datenerfassungsmittel, um jeweils Winkelstellungsdaten des kardanischen Aufhängungsmittels um die erste und die zweite Drehachse zu erfassen,
ein erstes und ein zweites Winkelgeschwindigkeits-Datenerfassungsmittel, welche an dem kardanischen Aufhängungsmittel fest angebracht sind, um jeweils Winkelgeschwindigkeitsdaten des kardanischen Aufhängungsmittels bei einer Änderung der Lage der optischen Einrichtung zu erfassen,
ein Rückkopplungsregelungsmittel zum Regeln der Schwenkbewegung des kardanischen Aufhängungsmittels um die erste und die zweite Drehachse durch Betreiben des Stellglieds beruhend auf den durch die Winkelstellungs-Datenerfassungsmittel und die Winkelgeschwindigkeits-Datenerfassungsmittel erfassten Daten, um das Umkehrprisma bezüglich eines Trägheitssystems festzuhalten, **gekennzeichnet durch**
ein Stellfaktor-Änderungsmittel zum Ändern eines Stellfaktors des Rückkopplungsregelungsmittels; und
ein Stellfaktor-Änderungs-Befehlsmittel, welches an einer von außen bedienbaren Position der optischen Vorrichtung angeordnet ist, um einen Bediener in die Lage zu versetzen, dem Stellfaktor-Änderungsmittel eine Änderung des Stellfaktors zu befehlen.

2. Bildstabilisierungsvorrichtung nach Anspruch 1, worin das Stellfaktor-Änderungs-Befehlmittel dazu ausgebildet ist, eine Schaltbetätigung zwischen einem Nieder-Stellfaktor-Modus, welcher auf die Bildstabilisierung gerichtet ist, und einem Hoch-Stellfaktor-Modus zu ermöglichen, welcher auf wenigstens einen Vorgang von Schwenkvorgang und Kippvorgang gerichtet ist.

3. Bildstabilisierungsvorrichtung nach Anspruch 1, worin das Stellfaktor-Änderungs-Befehlmittel derart ausgebildet ist, dass eine Mehrzahl von Schaltstufen zwischen einem Nieder-Stellfaktor-Modus, welcher auf die Bildstabilisierung gerichtet ist, und einem Hoch-Stellfaktor-Modus, welcher auf wenigstens einen Vorgang von Schwenkvorgang und Kippvorgang gerichtet ist, einrichtbar ist.

4. Bildstabilisierungsvorrichtung nach Anspruch 1, worin das Stellfaktor-Änderungs-Befehlmittel derart ausgebildet ist, dass der Stellfaktor zwischen einem Nieder-Stellfaktor-Modus, welcher auf die Bildstabilisierung gerichtet ist, und einem Hoch-Stellfaktor-Modus, welcher auf wenigstens einen Vorgang von Schwenkvorgang und Kippvorgang gerichtet ist, kontinuierlich veränderbar ist.

5. Bildstabilisierungsvorrichtung nach Anspruch 1, worin das Stellfaktor-Änderungs-Befehlmittel ein an einer Außenoberfläche des Gehäuses angeordneter Schalter ist.

6. Bildstabilisierungsvorrichtung nach Anspruch 1, worin das Winkelgeschwindigkeits-Datenerfassungsmittel ein Winkelgeschwindigkeitssensor zum Erfassen eines Betrags der Winkelgeschwindigkeit des kardanischen Aufhängungsmittels um die Drehachsen aufgrund eines Schüttelns der optischen Vorrichtung ist, wobei der Winkelgeschwindigkeitssensor durch einen piezoelektrischen Vibrationsgyrosensor gebildet ist, welcher einen säulenartigen Vibrator und ein piezoelektrisches Keramikelement verwendet.

## Revendications

1. Appareil de stabilisation d'image attaché à un appareil optique, l'appareil optique comprenant un système optique monoculaire ou binoculaire comprenant un prisme à redressement de l'image disposé entre les lentilles de l'objectif et les lentilles oculaires qui sont montées de façon fixe à l'intérieur d'un boîtier ;
cet appareil de stabilisation d'image comprenant :
des moyens de suspension à la Cardan comprenant des premier et deuxième axes de rotation s'étendant respectivement dans des directions transversale et verticale, par rapport à l'appareil optique, afin de monter de façon pivotante le prisme à redressement de l'image sur le boîtier ;
un actionneur destiné à faire pivoter les moyens de suspension à la Cardan autour des premier et deuxième axes de rotation ;
des premier et deuxième moyens de détection de données sur la position angulaire, destinés à détecter, respectivement, les données sur la position angulaire des moyens de suspension à la Cardan autour des premier et deuxième axes de rotation;
des premier et deuxième moyens de détection de données sur la vitesse angulaire, montés de façon fixe sur les moyens de suspension à la Cardan, destinés à détecter, respectivement, les données sur la vitesse angulaire des moyens de suspension à la Cardan lors d'un changement de position de l'appareil optique ;
des moyens de commande à réaction pour commander le mouvement pivotant des moyens de suspension à la Cardan, autour des premier et deuxième axes de rotation, en pilotant l'actionneur, sur la base des données détectées par les moyens de détection de données sur la position angulaire et par les moyens de détection de données sur la vitesse angulaire, afin d'immobiliser le prisme à redressement de l'image vis-à-vis d'un système d'inertie ; **caractérisé par**
des moyens de changement de gain destinés à changer un gain des moyens de commande à réaction ; et
des moyens d'instruction de changement de gain, disposés à un emplacement de l'appareil optique leur permettant d'être actionnés de l'extérieur, destinés à permettre à un opérateur de donner l'instruction, aux moyens de changement de gain, de changer ce gain.

2. Appareil de stabilisation d'image selon la revendication 1, dans lequel les moyens d'instruction de changement de gain sont configurés pour permettre une opération de commutation entre un mode de faible gain, destiné à la stabilisation de l'image, et un mode de gain élevé, destiné à au moins l'une des opérations d'exécution d'un panoramique et de pivotement.

3. Appareil de stabilisation d'image selon la revendication 1, dans lequel les moyens d'instruction de changement de gain sont configurés de telle sorte qu'une pluralité d'étapes de commutation peuvent être mises en oeuvre entre un mode de faible gain, destiné à la stabilisation de l'image, et un mode de gain élevé, destiné à au moins l'une des opérations d'exécution d'un panoramique et de pivotement.

4. Appareil de stabilisation d'image selon la revendication 1, 'dans lequel les moyens d'instruction de changement de gain sont configurés de telle sorte qu'il est possible de passer de façon continue d'un mode de faible gain, destiné à la stabilisation de l'image, à un mode de gain élevé, destiné à au moins l'une des opérations d'exécution d'un panoramique et de pivotement.

5. Appareil de stabilisation d'image selon la revendication 1, dans lequel les moyens d'instruction de changement de gain sont un commutateur disposé sur une surface extérieure du boîtier.

6. Appareil de stabilisation d'image selon la revendication 1, dans lequel les moyens de détection de données sur la vitesse angulaire sont un détecteur de vitesse angulaire destiné à détecter une valeur de vitesse angulaire des moyens de suspension à la Cardan autour des axes de rotation, du fait d'un ébranlement de l'appareil optique, le détecteur de vitesse angulaire étant constitué d'un détecteur gyroscopique à vibrations piézoélectriques utilisant un vibrateur colonnaire et un élément céramique piézoélectrique.
